# EUROPÄISCHE PATENTANMELDUNG

(11) **EP 4 588 410 A2**
(43) Veröffentlichungstag der Anmeldung: **23.07.2025**
(21) Anmeldenummer: 25152355.1
(22) Anmeldetag: 16.01.2025
(51) Int. Cl.: A47J 43/07

(54) **RÜHRAUFSATZ FÜR EINE KÜCHENMASCHINE MIT STREIFLIPPE UND STECKSCHUH FÜR EINEN SOLCHEN RÜHRAUFSATZ**

(30) Priorität: 17.01.2024 DE 202024100211 U
(71) Anmelder: Keller und Koop GmbH, 32758 Detmold (DE)
(72) Erfinder: Koop, Dennis, 32758 Detmold (DE); Keller, Matthias, 32657 Lemgo (DE)
(74) Vertreter: Kayser, Christoph

(57) **Zusammenfassung**

Ein Rühraufsatz für eine Küchenmaschine mit einem Gefäß zur Speisenzubereitung, wobei das Gefäß einen Boden auf-weist, mit einem Rührkörper und der im Betrieb mit wenigstens einem Rührelement in Nähe des Bodens rotiert, wobei der Rührkörper eine Anschlusseinrichtung zum Anschluss an eine Antriebswelle der Küchenmaschine umfasst, ist dadurch gekennzeichnet, dass das wenigstens eine Rührelement eine Streiflippe umfasst, die dazu geeignet ist, einen Abstand zwischen dem Rührelement und dem Boden des Gefäßes zu überbrücken.

## Beschreibung

Die vorliegende Erfindung betrifft einen Rühraufsatz für eine Küchenmaschine mit einem Gefäß zur Speisenzubereitung, wobei das Gefäß einen Boden aufweist und das Rühraufsatz einen Rührkörper aufweist, der im Betrieb mit wenigstens einem Rührelement in Nähe des Bodens rotiert, wobei der Rührkörper, der eine Anschlusseinrichtung zum Anschluss an eine Antriebswelle der Küchenmaschine umfasst.

Ein solcher Rühraufsatz ist zum Beispiel im Stand der Technik unter der Bezeichnung "Schmetterling" bekannt. Solche Rühraufsätze werden dazu genutzt, in dem Gefäß einer Küchenmaschine cremige Speisen zuzubereiten. Zu diesem Zweck wird ein solcher Rühraufsatz in dem Gefäß der Küchenmaschine mit der Antriebseinrichtung der Küchenmaschine verbunden, so dass der Rühraufsatz beim Betrieb der Küchenmaschine in dem Gefäß rotiert. Während der Rotation dreht der Rühraufsatz mit einem Rührelement in einem geringen Abstand vom Boden des Gefäßes. Durch diese Konstruktion kann das Rührelement Material, das auf dem Boden des Gefäßes vorhanden ist, nicht aufnehmen und in dem Rührprozess einbinden. Ein Benutzer muss daher nach einer unbestimmten Betriebszeit die Arbeit unterbrechen und mit Hilfe eines Küchenschabers das am Boden haftende Material lösen, um dieses beim fortgesetzten Betrieb in den Rührprozess zu überführen.

Das nicht vollständige Einbinden des in dem Gefäß befindlichen Materials in einen Rührprozess, das Unterbrechen eines Rührprozesses, um ein am Boden des Gefäßes abgesondertes Material manuell in den Rührprozess überführbar zu machen und die Wiederholungen solcher Vorgänge stellt einen Nachteil bekannter Rühraufsätze des Standes der Technik dar. Ein weiterer Nachteil ist, dass die am Boden verbleibenden Materialien dort anbrennen können. Dadurch wird nicht nur die zuzubereitende Speise verdorben, sondern auch dem Gefäßboden Schaden zugefügt.

Die Aufgabe der vorliegenden Erfindung ist daher, einen Rühraufsatz der eingangs genannten Gattung derart weiterzubilden, dass ein in dem Gefäß einer Küchenmaschine befindliches Material automatisch, ohne Unterbrechung und vollständig in einen Rührprozess eingebunden wird.

Die Aufgabe wird erfindungsgemäß dadurch gelöst, dass das wenigstens eine Rührelement eine Streiflippe umfasst, die einen Abstand zwischen dem Rührelement und dem Boden des Gefäßes schließt. Die erfindungsgemäße Streiflippe streift bei einem Rührprozess also am Boden des Gefäßes entlang und übernimmt somit die Aufgaben, die im Stand der Technik während der Unterbrechung mit einem Küchenschaber durchgeführt werden müssen. Während eines Rührprozesses wird also kontinuierlich Material vom Boden des Gefäßes gehoben oder gelöst und in den Rührprozess eingebunden, ohne dass eine Unterbrechung des Betriebs der Küchenmaschine dafür erforderlich wäre.

Ein weiterer Vorteil der vorliegenden Erfindung ist, dass die Streiflippe an dem wenigstens einen Rührelement lösbar verbunden ist. Durch die lösbare Ausbildung der Streiflippe an dem wenigstens einen Rührelement ist eine leichte Reinigung der Streiflippe unabhängig von dem Rührelement beziehungsweise dem Rühraufsatz möglich. Zudem können lösbar verbundene Konstruktionen genutzt werden, um die erfindungsgemäße Streiflippe an bestehende Rühraufsätze nachträglich anzubringen und wieder von diesen zu lösen.

Ein weiterer Vorteil der vorliegenden Erfindung ist auch, dass die Streiflippe an einer ersten Flachseite eines Steckschuhs ausgebildet ist. Durch diese Maßnahme ist es möglich, die Streiflippe schmal und elastisch auszubilden, ohne deren Handhabung beim Anbringen an das Rührelement dadurch zu beeinträchtigen. Der Steckschuh kann aus einem festen, formstabilen Material hergestellt sein und die Handhabung der Streiflippe dadurch erleichtern.

Ein weiterer Vorteil der vorliegenden Erfindung ist auch, dass der Steckschuh in einer der ersten Flachseite entgegengesetzten zweiten Flachseite einen Schlitz aufweist, der an einer Seite des Steckschuhs offen ist. Dadurch wird die Möglichkeit geschaffen, den Steckschuh über die seitliche Öffnung auf das Rührelement zu schieben, so dass das Rührelement wenigstens teilweise in dem Schlitz aufgenommen ist.

Es ist auch ein Vorteil der vorliegenden Erfindung, dass der Schlitz Abmessungen aufweist, die an die Abmessungen eines Rührelements passgenau angepasst sind, derart, dass der Steckschuh in einem auf das wenigstens eine Rührelement aufgeschobenen Zustand das jeweilige Rührelement wenigstens teilweise umschließt und mit diesem in einer Richtung parallel zur Drehachse fest, form- und kraftschlüssig und radial zur Drehachse lösbar, kraftschlüssig verbunden ist. Dadurch wird sichergestellt, dass der Steckschuh in einer Richtung parallel zur Drehachse nicht lösbar ist und in einer Richtung quer dazu in Abhängigkeit von einer manuell aufgebrachten Kraft lösbar ist. Die Kraft wird in der Praxis so groß gewählt sein, dass eine Lösung des Steckschuhs während des Betriebs der Küchenmaschine nicht möglich ist, dass aber eine manuelle Kraftaufwendung ausreicht, um den Steckschuh von dem Rührelement seitlich abzuziehen.

Ein weiterer Vorteil der vorliegenden Erfindung ist, dass die Streiflippe in einer alternativen Ausführungsform an dem wenigstens einen Rührelement einstückig angeformt ist. Selbst diese einstückige Angeformtheit führt zu dem bereits vorstehend genannten Vorteil, dass keine Unterbrechungen des Betriebs erforderlich sind, um am Boden des Gefäßes haftendes Material zu lösen.

Ein Vorteil ist auch, dass die Anschlusseinrichtung einen Steckeinsatz umfasst, der in einer Öffnung des Rühr-Rührkörpers eingefügt ist und einen Adapter bildet, der dazu geeignet ist, einen drehfesten Sitz des Rührkörpers auf der Antriebswelle herzustellen. Durch diese Maßnahme ist es möglich, den durch die Streiflippe erzeugten grö-ßeren Reibungswiderstand auszugleichen. Der gleitende Kontakt der Streiflippe am Boden des Gefäßes der Küchenmaschine erzeugt einen Widerstand, der eine größere Festigkeit der Verbindung des Rühraufsatzes mit der Antriebseinrichtung der Küchenmaschine erfordern könnte.

Zu diesem Zweck dient der Steckeinsatz der Anschlusseinrichtung.

Ein weiterer Vorteil der vorliegenden Erfindung ist, dass der Steckeinsatz eine Federeinrichtung umfasst, die dazu geeignet ist, einen festen Sitz in dem Rührkörper zu unterstützen. Der Steckeinsatz wird unter Überwindung seiner Federspannung in eine entsprechende Öffnung des Rühraufsatzes eingeschoben, so dass die Federeinrichtung gegen die Innenwand des Rührkörpers vorgespammt ist. Der Steckeinsatz wiederum dient zur Aufnahme der Antriebswelle der Küchenmaschine.

Ein weiterer Vorteil der vorliegenden Erfindung ist auch, dass der Steckeinsatz eine vorgespannte Rastnase umfasst, die dazu geeignet ist, in ein Umfangsloch des Rührkörpers einzugreifen, wenn der Steckeinsatz in dem Rührkörper sitzt. Eine solche Rastnase schnappt von innen in das Umfangsloch und stellt dadurch zusätzlich eine Drehsperre in dem Rührkörper und dem Steckeinsatz her.

Es ist auch ein Vorteil der vorliegenden Erfindung, dass der Schlitz in einem Steckschuh-Rührkörper ausgebildet ist, welcher die erste Flachseite mit der Streiflippe und die zweite Flachseite mit dem Schlitz aufweist und eine Öffnungsseite aufweist, in der sich der Schlitz seitlich öffnet, wobei die erste Flachseite einen im Wesentlichen U-förmigen Ausschnitt aufweist, der in die Öffnungsseite mündet. Durch die Ausgestaltung der Öffnungsseite wird eine stabile Aufnahme gebildet, in dem beim Aufschieben des Steckschuhs auf das Rührelement die Seitenkante des Rührelements sicher aufgenommen werden kann.

Ein weiterer Vorteil der vorliegenden Erfindung ist auch, dass der Schlitz über seine gesamte Länge in der ersten Flachseite eine unterschiedliche Schlitzbreite aufweist, wobei der Schlitz zwei Schlitzkanten aufweist, die parallel und spiegelsymmetrisch ausgebildet sind, wobei jede der zwei Schlitzkanten in Abständen jeweils eine konkave Ausnehmung aufweist. Dadurch ist es möglich, den Schlitz und seine Schlitzbreite an konstruktive Details des Rührelements anzupassen. Beim Aufschieben des Steckschuhs rasten am Rührelement vorhandene Verdickungen in den jeweiligen konkaven Ausnehmungen ein, so dass eine feste, aber nicht unlösbare Verbindung in seitlicher Richtung hergestellt werden kann.

Weitere Vorteile der vorliegenden Erfindung ergeben sich aus den weiteren Merkmalen der Unteransprüche.

Eine Ausführungsform der vorliegenden Erfindung wird im Folgenden anhand der Zeichnungen näher beschrieben. Es zeigen:
Fig.1 eine schematische Darstellung eines Rühraufsatzes gemäß vorliegender Erfindung mit einem aufgeschobenem Steckschuh;
Fig. 2 eine schematische Darstellung eines Rühraufsatzes gemäß vorliegender Erfindung mit teilweise aufgeschobenem Steckschuh und installiertem Rührwerkzeug;
Fig. 3 eine schematische Darstellung eines Steckeinsatzes für den Rühraufsatz aus Fig. 1 und Fig. 2;
Fig. 4 eine schematische, perspektivische Darstellung des Steckschuhs aus Fig. 1 und Fig. 2;
Fig. 5 eine schematische Draufsicht des Steckschuhs aus Fig. 4;
Fig. 6 eine schematische Seitenansicht des Steckschuhs aus Fig. 4 und Fig. 5.

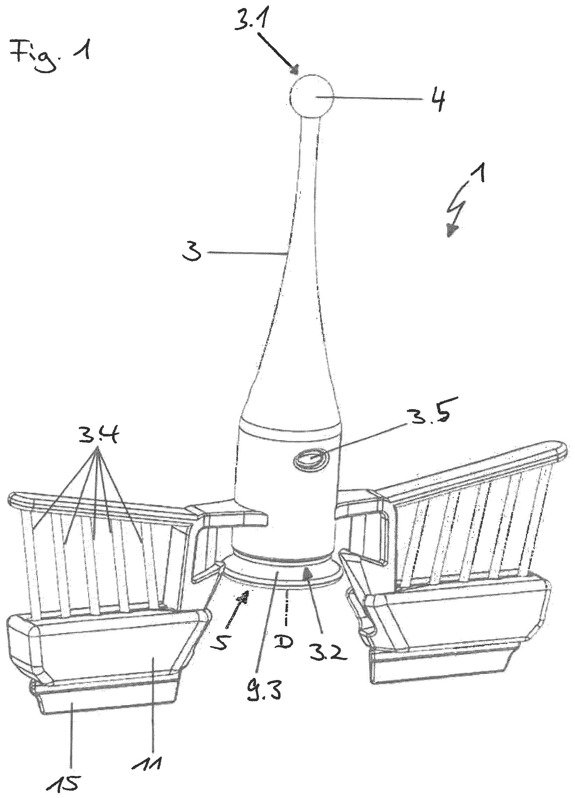

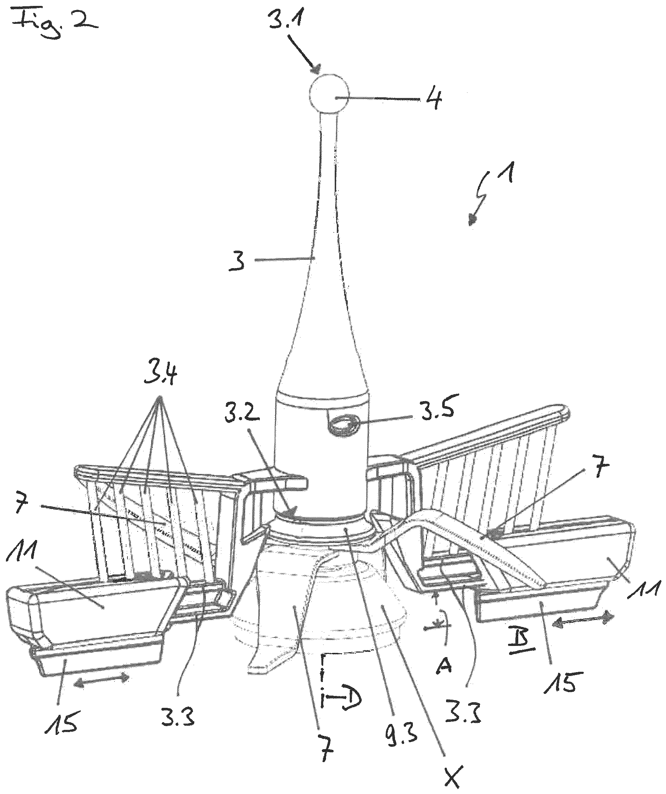

In Fig. 1 ist ein Rühraufsatz 1 gemäß vorliegender Erfindung schematisch und in Perspektive dargestellt. Der Rühraufsatz 1 weist einen Rührkörper 3 auf, der an einem freien ersten Ende 3.1 mit einem Griff 4 ausgebildet ist. An einem dem Griff 4 entgegengesetzten zweiten Ende 3.2 des Rührkörpers 3 ist eine Anschlusseinrichtung 5 zum Anschluss an eine Antriebswelle der Küchenmaschine angeordnet. Der Rühraufsatz 1 ist rotationssymmetrisch zu einer Drehachse D ausgebildet und dreht sich im Betrieb der Küchenmaschine und im ordnungsgemäß angeschlossenen Zustand um diese Drehachse D. Der Rührkörper 3 weist wenigstens ein Rührelement 3.3 (Fig. 2) auf, das sich radial zu der Drehachse D erstreckt, wenn der Rührkörper 3 an die Antriebseinrichtung X der Küchenmaschine gekoppelt ist.

Wenn die Anschlusseinrichtung 5 mit der Antriebseinrichtung beziehungsweise der Antriebswelle der Küchenmaschine gekoppelt ist und der Rühraufsatz 1 in Drehung versetzt wird, berührt der Rührkörper 3 den Boden eines Gefäßes der Küchenmaschine nicht. Der Rührkörper 3 streift mit seinem Rührelement 3.3 vielmehr in einem Abstand A (Fig. 2) zu dem Boden B des Gefäßes.

In Fig. 2 ist schematisch dargestellt, wie der Rühraufsatz 1 mit der Antriebseinrichtung der Küchenmaschine gekoppelt ist. Die Anschlusseinrichtung 5 sitzt auf der Antriebswelle der Küchenmaschine, oberhalb eines Rührwerkzeugs 7. Zudem ist eine Zwischensituation dargestellt, in der die beiden Steckschuhe 11 teilweise auf das Rührelement 3.3 aufgeschoben oder abgezogen sind. Ein Doppelpfeil zeigt die Bewegungsrichtung des Steckschuhs 11 an. Dieser wird beim Aufschieben oder Abziehen mit Daumen und Zeigefinger einer Hand gegriffen und in die entsprechende Richtung nach außen gezogen oder nach innen geschoben.

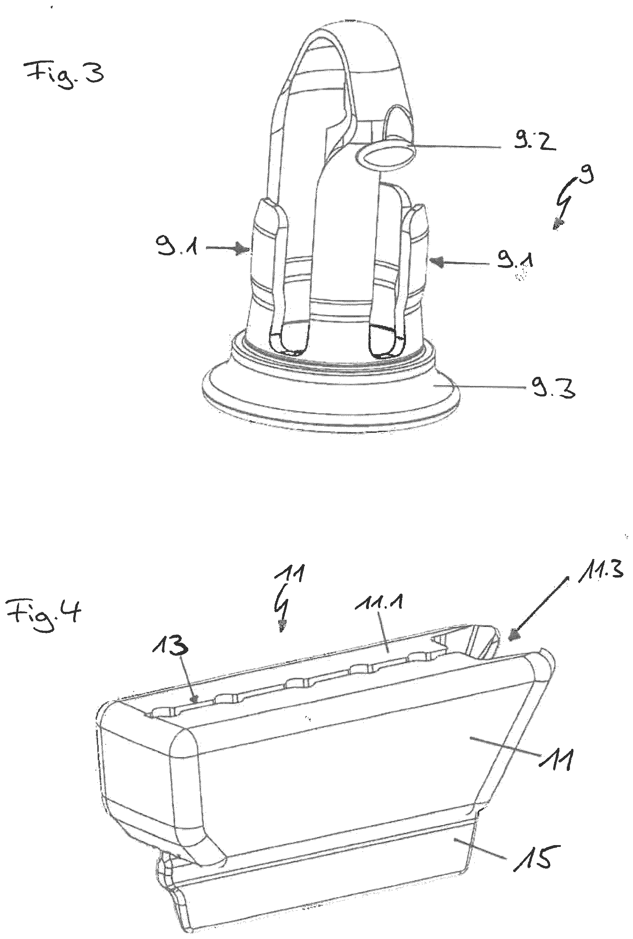

In Fig. 3 ist die Anschlusseinrichtung 5 näher dargestellt. Diese umfasst in der vorliegenden Ausführungsform einen Steckeinsatz 9, der in axialer Richtung der Drehachse D in das zweite Ende 3.2 des Rührkörpers 3 lösbar eingesetzt ist. Zu diesem Zweck weist der Steckeinsatz 9 eine Federeinrichtung 9.1 auf, die im eingesetzten Zustand in radialer Richtung gegen eine Innenwand des Rührkörpers 3 vorgespannt ist. Der Steckeinsatz 9 umfasst auch eine Rastnase 9.2, die nach außen vorgespannt ist. Zudem umfasst der Steckeinsatz 9 einen Anschlusssockel 9.3, der einen Ring mit einer Aufnahmeöffnung für die Antriebswelle der Küchenmaschine bildet. Der Steckeinsatz 9 wird mit der Rastnase 9.2 durch die Querschnittsöffnung am zweiten Ende 3.2 des Rührkörpers 3 eingesteckt, so lange, bis die Rastnase 9.2 in eine Umfangsloch 3.5 des Rührkörpers 3 eingreift. Die im Anschlusssockel 9.3 des Steckeinsatzes 9 ausgebildete Aufnahmeöffnung ist in ihren Abmessungen an die Antriebswelle der Antriebseinrichtung der Küchenmaschine angepasst, derart, dass die Antriebswelle in dem Steckeinsatz 9 passgenau aufgenommen ist und eine Drehung auf den Rühraufsatz 1 übertragen kann.

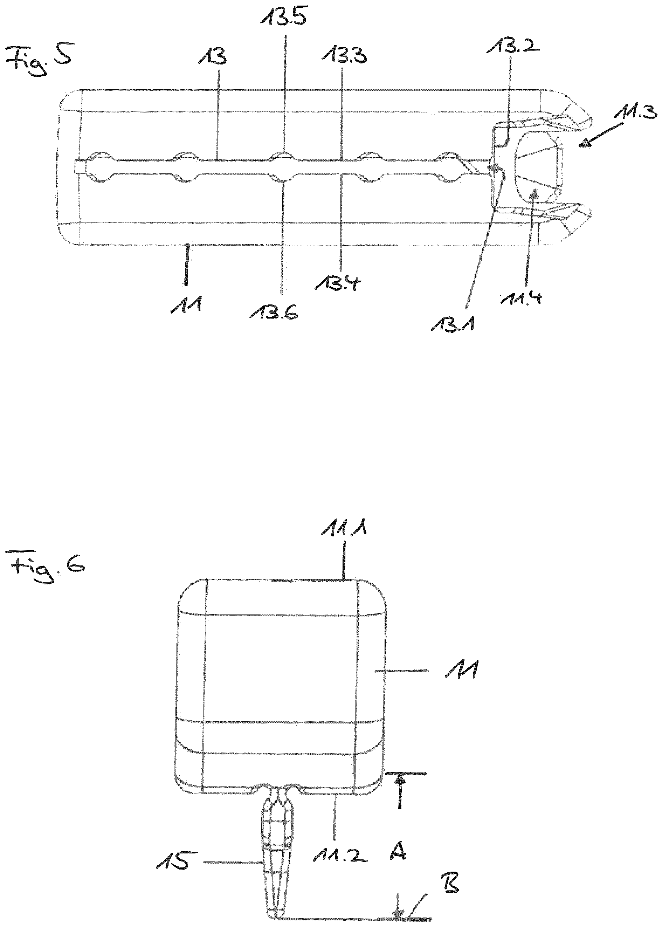

Zur Überbrückung des Abstands A (Fig. 6) zwischen dem Rührelement 3.3 und dem Boden B (Fig. 6) des Gefäßes der Küchenmaschine ist auf das Rührelement 3.3 ein Steckschuh 11 aufgesteckt. Das ist in Fig. 1 dargestellt. In Fig. 1 ist auch dargestellt, wie der Streckschuh 11 nur zu einem Teil auf das Rührelement 3.3 aufgesteckt ist. Das ist eine Zwischenposition, bevor der Steckschuh 11 seine Endposition erreicht oder von dem Rührelement 3.3 ganz abgezogen ist. Der Steckschuh 11 kann eine beliebige Form haben, ist in der dargestellten Ausführungsform aber leicht quaderförmig beziehungsweise von der Seite leicht trapezförmig ausgebildet. In anderen Ausführungsformen kann die lösbare Verbindung mit dem Rührelement 3.3 auch in einer anderen Weise erfolgen. Zum Beispiel sind auch Klick- und Rastverbindungen möglich, die eine lösbare aber im Betrieb sicher Verbindung bereitstellen.

Der Steckschuh 11 weist eine erste Flachseite 11.1 und eine zweite Flachseite 11.2 (Fig. 6) auf, die in der vorliegenden Ausführungsform im Wesentlichen parallel zueinander verlaufen. In der ersten Flachseite 11.1 ist ein Schlitz 13 ausgebildet, während an der zweiten Flachseite 11.2 eine Streiflippe 15 ausgebildet ist.

In Fig. 4 und in Fig. 5 ist eine Öffnungsseite 11.3 des Steckschuhs 11 dargestellt. Die Öffnungsseite 11.3 weist einen in der Draufsicht in Fig. 5 erkennbaren, im Wesentlichen U-förmigen Ausschnitt 11.4 auf. In diesem U-förmigen Ausschnitt 11.4 mündet der Schlitz 13 mit einer seitlichen Schlitzöffnung 13.1. Das heißt, der Schlitz 13 erstreckt sich mit einer Schlitzlänge über fast die gesamte Länge der ersten Flachseite 11.1 und in, senkrecht dazu mit der seitlichen Schlitzöffnung 13.1 über eine Höhe, die einem inneren Abstand zwischen der ersten Flachseite 11.1 und der zweiten Flachseite 11.2 entspricht, also fast der gesamten baulichen Höhe des Steckschuhs 11 entspricht. In der vorliegenden Ausführungsform ist die seitliche Schlitzöffnung 13.1 in einer Schlitz-Öffnungswand 13.2 ausgebildet, die sich in einem im Wesentlichen rechten Winkel zu der ersten Flachseite 11.1 erstreckt. Der im Wesentlichen U-förmige Ausschnitt 11.4 in der Öffnungsseite 11.3 des Steckschuhs 11 hilft in seiner die Schlitzöffnung 13.1 U-förmig umgreifenden Struktur beim "Einfädeln" des Rührelements 3.3 in die Schlitzöffnung 13.1.

Der Schlitz 13 weist über die gesamte Länge des Schlitzes 13 eine unterschiedliche Schlitzbreite auf. In Fig. 4 und in Fig. 5 ist zu sehen, dass der Schlitz 3 zwei im Wesentlichen parallel verlaufende Schlitzkanten 13.3 und 13.4 aufweist, die in Längsrichtung der ersten Flachseite 11.1 und in jeweils gleichen Abständen jeweils wenigstens eine erste konkave Ausnehmung 13.5 oder eine zweite konkave Ausnehmung 13.6 aufweisen. In der dargestellten Ausführungsform sind an der ersten Schlitzkante 13.1 fünf erste konkave Ausnehmungen 13.5 und an der zweiten Schlitzkante 13.2 fünf zweite konkave Ausnehmungen 13.6 ausgebildet. Die ersten und zweiten konkaven Ausnehmungen 13.5, 13.6 entsprechen im Negativ einer geometrischen Ausbildung (Positiv) von Bauteilen 3.4 des Rührkörpers 3 oder Verdickungen an dem Rührelement 3.3, so dass der vollständig auf das Rührelement 3.3 aufgeschobene Steckschuh 11 an diesen Bauteilen 3.4 oder Verdickungen mit den Stellen der konkaven Ausnehmungen 13.5, 13.6 eine Rastverbindung erzeugt. Eine Trennung des Steckschuhs 11 entgegen der Richtung des Aufschiebens ist manuell möglich, kann aber aufgrund der Rastverbindung im Betrieb nicht selbsttätig erfolgen. Der Steckschuh 11 ist aus einem Material hergestellt, das eine vorübergehende Weitung des Schlitzes 13 beim Überfahren der Konturen der Bauteile 3.4 oder Verdickungen am Rührelement 3.3 zwischen den konkaven Ausnehmungen 13.5 und 13.6 zulässt.

Der Schlitz 13 in der ersten Flachseite 11.1 und die Streiflippe 15, die an der zweiten Flachseite 11.2 angeformt ist, liegen in wenigstens einer gemeinsamen vertikalen Ebene, wenn der Rühraufsatz 3 mit dem Steckschuh 11 mit der Küchenmaschine gekoppelt ist. Die Streiflippe 15 streift dann während des Betriebs, das heißt bei einer Drehung um die Drehachse D, über den Boden des Gefä-ßes. Zu diesem Zweck ist die Streiflippe 15 aus einem flexiblen Material hergestellt, zum Beispiel Silikon oder Gummi. In anderen Ausführungsformen kann die Streiflippe 15 auch so ausgebildet sein, dass diese im Betrieb nicht nur über den Boden B des Gefäßes streift, sondern auch noch an einem an den Boden B des Gefäßes angrenzenden Rand des Gefäße entlangstreifen kann, also auch einen seitlichen Abstand zum Gefäß überbrückt.

In einer einfachen Ausführungsform kann die Streiflippe 15 auch direkt an das Rührelement 3.3 angeformt sein. Dann kann der Streckschuh 11 zur Herstellung einer mechanischen Verbindung zwischen Streiflippe 15 und Rührelement 3.3 entfallen.

### Bezugszeichenliste

- 1: Rühraufsatz
- 3: Rührkörper
- 3.1: freies erstes Ende
- 3.2: zweites Ende
- 3.3: Rührelement
- 3.4: Öffnung
- 4: Griff
- 5: Anschlusseinrichtung
- 7: Rührwerkzeug
- 9: Steckeinsatz
- 9.1: Federeinrichtung
- 9.2: Rastnase
- 9.3: Anschlusssockel
- 11: Steckschuh
- 11.1: erste Flachseite
- 11.2: zweite Flachseite
- 11.3: Öffnungsseite
- 11.4: U-förmiger Ausschnitt
- 13: Schlitz
- 13.1: seitliche Schlitzöffnung
- 13.2: Schlitz-Öffnungswand
- 13.3: erste Schlitzkante
- 13.4: zweite Schlitzkante
- 13.5: erste konkave Ausnehmung
- 13.6: zweite konkave Ausnehmung
- 15: Streiflippe
- A: Abstand
- B: Boden Gefäß
- X: Antriebseinrichtung Küchenmaschine
- D: Drehachse

## Patentansprüche

1. Rühraufsatz (1) für eine Küchenmaschine mit einem Gefäß zur Speisenzubereitung, wobei das Gefäß einen Boden aufweist, mit einem Rührkörper (3), der im Betrieb mit wenigstens einem Rührelement (3.3) in Nähe des Bodens rotiert, wobei der Rührkörper (3) eine Anschlusseinrichtung (5) zum Anschluss an eine Antriebswelle der Küchenmaschine umfasst,
**dadurch gekennzeichnet,**
**dass** das wenigstens eine Rührelement (3.3) eine Streiflippe (15) umfasst, die dazu geeignet ist, einen Abstand zwischen dem Rührelement (3.3) und dem Boden des Gefäßes zu überbrücken.

2. Rühraufsatz nach Anspruch 1,
**dadurch gekennzeichnet,**
**dass** die Streiflippe (15) an dem wenigstens einen Rührelement (3.3) lösbar verbunden ist.

3. Rühraufsatz nach Anspruch 1 oder 2,
**dadurch gekennzeichnet,**
**dass** die Streiflippe (15) an zweiten Flachseite (11.2) eines Steckschuhs (11) ausgebildet ist.

4. Rühraufsatz nach Anspruch 3,
**dadurch gekennzeichnet,**
**dass** der Steckschuh (11) in einer der zweiten Flachseite (11.2) entgegengesetzten ersten Flachseite (11.1) einen Schlitz (13) aufweist, der an einer Öffnungsseite (11.3) des Steckschuhs (11) offen ist.

5. Rühraufsatz nach Anspruch 4,
**dadurch gekennzeichnet,**
**dass** der Schlitz (13) Abmessungen aufweist, die an die Abmessungen des Rührelements (3.3) passgenau angepasst sind, derart, dass der Steckschuh (11) in einem auf das wenigstens eine Rührelement (3.3) aufgeschobenen Zustand das jeweilige Rührelement (3.3) wenigstens teilweise umschließt und mit diesem in einer Richtung parallel zur Drehachse (D) fest, form- und kraftschlüssig und radial zur Drehachse lösbar, kraftschlüssig verbunden ist.

6. Rühraufsatz nach Ansprüche 1,
**dadurch gekennzeichnet,**
**dass** die Streiflippe (15) an dem wenigstens einen Rührelement (3.3) einstückig angeformt ist.

7. Rühraufsatz nach einem der vorstehenden Ansprüche,
**dadurch gekennzeichnet,**
**dass** die Anschlusseinrichtung (5) einen Steckeinsatz (9) umfasst, der in einer Öffnung des Rührkörpers (3) eingefügt ist und einen Adapter bildet, der dazu geeignet ist, einen drehfesten Sitz des Rührkörpers (3) auf der Antriebswelle herzustellen.

8. Rühraufsatz nach Anspruch 7,
**dadurch gekennzeichnet,**
**dass** der Steckeinsatz (9) eine Federeinrichtung (9.1) umfasst, die dazu geeignet ist, einen festen Sitz in dem Rührkörper (3) zu unterstützen.

9. Rühraufsatz nach Anspruch 7 oder 8,
**dadurch gekennzeichnet,**
**dass** der Steckeinsatz (9) eine vorgespannte Rastnase (9.2) umfasst, die dazu geeignet ist, in eine Öffnung (3.4) des Rührkörpers (3) einzugreifen, wenn der Steckeinsatz (9) in dem Rührkörper (3) passgenau sitzt.

10. Steckschuh für ein Rühraufsatz nach einem der Ansprüche 4 bis 9.

11. Steckschuh nach Anspruch 10,
**dadurch gekennzeichnet,**
**dass** in einer ersten Flachseite (11.1) ein Schlitz (13) und in einer zweiten Flachseite (11.1) eine Streiflippe (15) ausgebildet sind und sich der Schlitz (13) seitlich in einer Öffnungsseite (11.3) öffnet.

12. Steckschuh nach Anspruch 11,
**dadurch gekennzeichnet,**
**dass** die erste Flachseite (11.1) einen im Wesentlichen U-förmigen Ausschnitt (11.4) aufweist, der in der Öffnungsseite (11.3) mündet.

13. Steckschuh nach Anspruch 12,
**dadurch gekennzeichnet,**
**dass** in dem im Wesentlichen U-förmigen Ausschnitt (11.4) eine Schlitz-Öffnungswand (13.2) mit einer seitlichen Schlitzöffnung (13.1) ausgebildet ist.

14. Steckschuh nach einem der Ansprüche 10 bis 13,
**dadurch gekennzeichnet,**
**dass** der Schlitz (13) über seine gesamte Länge in der ersten Flachseite (11.1) eine unterschiedliche Schlitzbreite aufweist.

15. Steckschuh nach Anspruch 14,
**dadurch gekennzeichnet,**
**dass** der Schlitz (13) eine erste und eine zweite Schlitzkanten (13.3; 13.4) aufweist, die parallel und spiegelsymmetrisch ausgebildet sind, wobei jede der zwei Schlitzkanten (13.3; 13.4) in Abständen jeweils wenigstens eine konkave erste oder zweite Ausnehmung (13.5; 13.6) aufweist.

16. Steckschuh nach einem der Ansprüche 10 bis 15,
**dadurch gekennzeichnet,**
**dass** die zweite Flachseite (11.2) mit der Streiflippe (15) und die erste Flachseite (11.1) mit dem Schlitz (13) im Wesentlichen flächenparallel ausgebildet sind.

17. Steckschuh nach einem der Ansprüche 10 bis 16,
**dadurch gekennzeichnet,**
**dass** die Streiflippe (15) und der Schlitz (13) in wenigstens einer gemeinsamen Ebene liegen.
